# EUROPEAN PATENT APPLICATION

(11) **EP 4 516 633 A1**
(43) Date of publication of application: **05.03.2025**
(21) Application number: 22940067.6
(22) Date of filing: 26.04.2022
(51) Int. Cl.: B62D 5/04

(54) **ELECTRIC POWER STEERING DEVICE**

(71) Applicant: MITSUBISHI ELECTRIC CORPORATION, Chiyoda-ku Tokyo 100-8310 (JP)
(72) Inventor: MATSUNAGA Toshihiro, Tokyo 100-8310 (JP); ONISHI Yoshihiko, Tokyo 100-8310 (JP); AKIYAMA Shuzo, Tokyo 100-8310 (JP); FUJIKURA Shohei, Tokyo 100-8310 (JP); TANIWAKI Shota, Tokyo 100-8310 (JP)
(74) Representative: Hoffmann Eitle
(86) International application number: PCT/JP2022/018808
(87) International publication number: WO 2023/209787

(57) **Abstract**

An electric power steering device (1, 1A, 1B) includes a motor (2), a heatsink (32) in which a bearing (33) configured to rotatably support a rotary shaft (21) of the motor is provided, and a circuit board (31), on which an inverter circuit (4, 4A, 4B) configured to drive the motor, disposed on a surface of the heatsink opposite to the motor, a heat generating element (8, 8A, 8B, 9, 9A, 9B) that constitutes the inverter circuit being disposed in a projection region (42) of the circuit board on which an outer shape of the heatsink is projected when seen in an axial direction of the rotary shaft, and the inverter circuit being configured to be driven by a first voltage of 20 V or more.

## Description

### Technical Field

The present disclosure relates to an electric power steering device.

### Background Art

Patent Document 1 discloses an electric power steering device attached to a vehicle and configured to assist a driver in a steering operation. The electric power steering device includes a control device having a configuration in which an inverter circuit configured to drive a motor and a control circuit configured to control the inverter circuit are provided on a circuit board, and the control device is integrated with the motor. The inverter circuit includes a power semiconductor element such as a switching element or the like, and the power semiconductor element is a heat generating element that generates heat according to driving of the motor. In addition, electronic parts mounted on the circuit board may have a determined upper limit of the operating temperature, and when the operating temperature reaches the upper limit, measures such as suspending the operation of the electric power steering device may be taken in order to prevent malfunction or damage to the electronic parts. In this case, since the continuous usage time of the electric power steering device becomes shorter, which may lead to reduction in steering assisting force, the electric power steering device is provided with a heat radiating structure that dissipates the heat of the heat generating element.

### Citation List

### Patent Document

Patent Document 1: Japanese Patent No. 6146380

### Summary of Invention

### Problem to be Solved by the Invention

Patent Document 1 employs, as a heat radiating structure, a structure configured to radiate heat generated from the heat generating element of the circuit board to a heatsink via a heat radiating material by providing the heat radiating material between a surface of the circuit board having another surface on which the heat generating element is mounted and the heatsink that constitutes a part of a housing of the motor and closely attaching the heat radiating material to the circuit board and the heatsink by screw-fixing the circuit board to the housing. Such a structure is intended to efficiently radiate the heat of the heat generating element, but it is necessary to secure an area for the circuit board and the heat sink to be in close contact with the heat radiating material, and there have been issues with using the heat radiating material, such as increasing the size of the equipment and increasing product weight.

The present disclosure was made in order to solve the above-mentioned problems and is directed to providing an electric power steering device integrated with a control device capable of downsizing and simplifying a heat radiating structure, reducing product weight and enabling low-cost manufacturing, by reducing the heating value of a heat generating element.

### Means to Solve the Problem

An electric power steering device according to the present disclosure includes a motor; a heatsink in which a bearing configured to rotatably support a rotary shaft of the motor is provided; and a circuit board, on which an inverter circuit configured to drive the motor is provided, disposed on a surface of the heatsink opposite to the motor, a heat generating element that constitutes the inverter circuit being disposed in a projection region of the circuit board on which an outer shape of the heatsink is projected when seen in an axial direction of the rotary shaft, and the inverter circuit being configured to be driven by a first voltage of 20 V or more.

### Effects of the Invention

According to the present disclosure, since the heating value of a heat generating element can be reduced, it is possible to provide an electric power steering device integrated with a control device capable of downsizing and simplifying a heat radiating structure, reducing product weight and enabling low-cost manufacturing.

### Brief Description of Drawings

[FIG. 1] A block diagram showing an electric power steering device according to Embodiment 1.
[FIG. 2] A cross-sectional view of the electric power steering device according to Embodiment 1.
[FIG. 3] A plan view of a circuit board according to Embodiment 1.
[FIG. 4] A plan view of a circuit board according to Variant 1 of Embodiment 1.
[FIG. 5] A cross-sectional view along line V-V of FIG. 4.
[FIG. 6] A plan view of a circuit board according to Variant 2 of Embodiment 1.
[FIG. 7] A cross-sectional view along line VII-VII of FIG. 6.
[FIG. 8] A plan view of a circuit board according to Variant 3 of Embodiment 1.
[FIG. 9] A cross-sectional view along line IX-IX of FIG. 8.
[FIG. 10] A block diagram showing an electric power steering device according to Variant 4 of Embodiment 1.
[FIG. 11] A block diagram showing an electric power steering device according to Embodiment 2.
[FIG. 12] A plan view of a circuit board according to Embodiment 2.
[FIG. 13] A block diagram showing an electric power steering device according to a variant of Embodiment 2.

### Description of Embodiments

### Embodiment 1

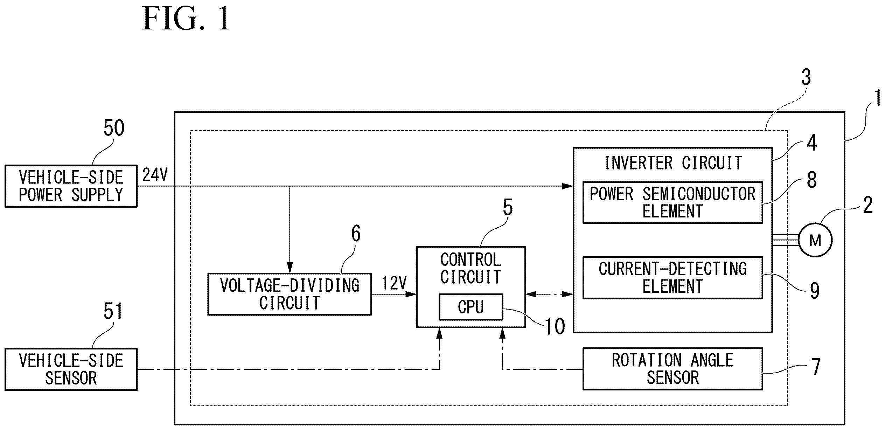

FIG. 1 is a block diagram showing an electric power steering device 1 according to Embodiment 1. The electric power steering device 1 shown in FIG. 1 includes a motor 2 configured to generate a steering assisting force, and a control device 3 configured to control the motor 2. The motor 2 according to the embodiment is a 3-phase brushless motor. A vehicle-side power supply 50 and a vehicle-side sensor 51, which are mounted on a vehicle, are electrically connected to the control device 3. That is, the vehicle-side power supply 50 and the vehicle-side sensor 51 are provided outside the electric power steering device 1. The vehicle-side power supply 50 is, for example, a battery, and supplies direct current electric power of 24 V (a first voltage) to the control device 3. As a specific example of the vehicle-side sensor 51, a vehicle speed sensor configured to detect a speed of the vehicle, a torque sensor configured to detect a steering torque of a handle, or the like is exemplified.

As shown in FIG. 1, the control device 3 includes an inverter circuit 4, a control circuit 5, a voltage-dividing circuit 6 (step-down circuit), and a rotation angle sensor 7. The inverter circuit 4 is controlled by the control circuit 5 and configured to supply and cut off current to the motor 2. The inverter circuit 4 according to the embodiment is fed electric power of 24 V from the vehicle-side power supply 50 and driven by the electric power. However, from the discharging and charging status of the vehicle-side power supply 50, the voltage supplied from the vehicle-side power supply 50 is not necessarily constant, and the inverter circuit 4 is configured to operate at, for example, a voltage of 20 V or more and 32 V or less as appropriate. The inverter circuit 4 has a plurality of power semiconductor elements 8 functioning as switching elements, and a current-detecting element 9 configured to detect a magnitude of the current. In addition, while not shown, the inverter circuit 4 has a plurality of ripple capacitors configured to absorb ripples of the current flowing through the motor 2. As an example of the power semiconductor elements 8, a field effect transistor (FET) can be employed. A plurality of bridge circuits are constituted by a plurality of switching elements, and each of the bridge circuits is configured to supply current to each winding of three phases (U, V, W) provided in the motor 2. The current-detecting element 9 may be, for example, a shunt resistor.

The control circuit 5 has a CPU 10 configured to perform calculation processing. In addition, while not shown, the control circuit 5 may have a driving circuit used in switching control of the inverter circuit 4 by the CPU 10, an input circuit configured to transmit a signal from the rotation angle sensor 7 and the vehicle-side sensor 51 to the CPU 10, a regulator circuit configured to regulate a voltage, and the like. Each function of the CPU 10, the driving circuit, the input circuit, and the regulator circuit can be realized by, for example, an integrated circuit (IC), an application specific integrated circuit (ASIC), or the like. The CPU 10 is configured to acquire various types of input signals, and as a specific example of the input signal, information from the vehicle-side sensor 51, a voltage of each part in the inverter circuit 4, a magnitude of driving current of the motor 2 detected by the current-detecting element 9, a detection result of a rotation angle by the rotation angle sensor 7, and the like are exemplified.

The voltage-dividing circuit 6 is a circuit (step-down circuit) configured to generate a lower voltage of 12 V (a second voltage) from the voltage of 24 V supplied from the vehicle-side power supply 50. The voltage-dividing circuit 6 is constituted by, for example, two resistors. The voltage-dividing circuit 6 is electrically connected to the control circuit 5, and supplies the generated voltage of 12 V to the control circuit 5.

Further, instead of the voltage-dividing circuit 6, since the voltage (second voltage) is lower than and generated from the voltage of 24 V (first voltage) supplied from the vehicle-side power supply 50, for example, a regulator or a step-down type DC/DC converter may be provided.

The rotation angle sensor 7 is used to detect a rotation angle of the motor 2. The rotation angle sensor 7 according to the embodiment detects a rotation angle of the motor 2 by a magnetic change. Electric power adjusted to an appropriate voltage by the voltage-dividing circuit 6 or the regulator circuit is supplied to the rotation angle sensor 7.

In addition, while not shown, the control device 3 may have a power relay configured to cut off supply of electric power to the inverter circuit 4, and a noise filter connected to the vehicle-side power supply 50. The power relay is used to protect the inverter circuit 4 from incorrect connections of the vehicle-side power supply 50 to the control device 3. The FET, which is a switching element, can also be used for the power relay. When the noise filter is provided, the electric power supplied from the vehicle-side power supply 50 passes through the noise filter and then is supplied to the inverter circuit 4 and the voltage-dividing circuit 6. The noise filter may be constituted by a laminated ceramic capacitor and a choke coil.

General operations of the control circuit 5 will be described. The CPU 10 calculates a magnitude of the driving current supplied to each winding of the motor 2 on the basis of the acquired input signal or the like. The CPU 10 performs switching control of the inverter circuit 4 based on the calculation result. More specifically, the CPU 10 issues control instructions to the driving circuit. The driving circuit controls the power semiconductor elements 8 functioning as switching elements based on the control instruction from the CPU 10. Control of the CPU 10 via the driving circuit is performed on each phase (U, V, W) of the motor 2. That is, as the power semiconductor element 8 of each phase (U, V, W) is driven by the driving circuit, predetermined current flows to each winding of the motor 2.

The magnitude of the current value supplied to each winding of the motor 2 is supplied to the CPU 10 as an actual current value via the current-detecting element 9. The CPU 10 executes feedback control according to a deviation between the calculation value (target value) and the actual current value.

In addition, the CPU 10 uses the rotation angle information obtained by the rotation angle sensor 7 in rotation control of the motor 2. Specifically, the CPU 10 calculates a rotation angle (phase) or a rotation speed of a rotary shaft 21 of the motor 2 using the rotation angle information obtained by the rotation angle sensor 7.

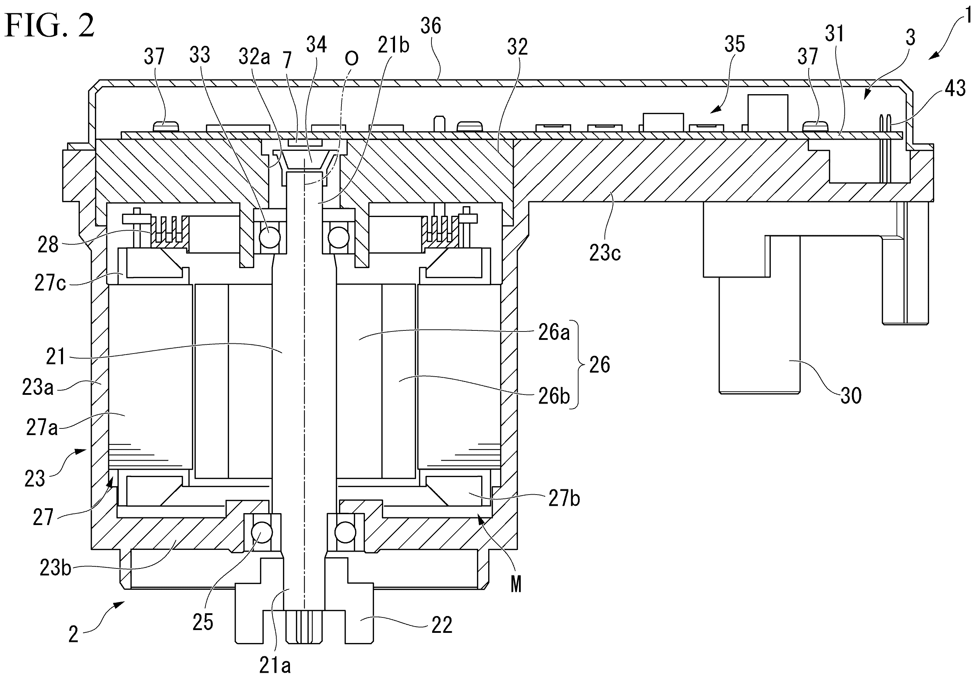

Next, structures of respective parts of the electric power steering device 1 including the control device 3 and the motor 2 will be described with reference to FIG. 2.

FIG. 2 is a cross-sectional view showing the electric power steering device 1 according to Embodiment 1. In the following description, a direction in which a center axis O of the rotary shaft 21 in the motor 2 extends may be referred to as an axial direction. The axial direction is also a thickness direction of a circuit board 31 in the control device 3. In addition, in the axial direction, a side where the control device 3 is located may be referred to as an upper side, and a side where the motor 2 is located may be referred to as a lower side. A view in the axial direction may be referred to as a plan view. In the plan view, a direction crossing the center axis O may be referred to as a radial direction, and a direction around the center axis O may be referred to as a circumferential direction.

A lower end portion of the rotary shaft 21 in the motor 2 is used as an output end 21a. A boss 22 connected to an object to be driven (for example, a steering system of the vehicle) is attached to the output end 21a. A decelerator or the like may be interposed between the output end 21a and the object to be driven. The output of the motor 2 is transmitted to the object to be driven via the output end 21a. Further, when the electric power steering device 1 is employed, the axial direction of the rotary shaft 21 may not coincide with the vertical direction.

The motor 2 includes a motor main body M and a motor case 23. The motor case 23 has a cylindrical portion 23a, a bottom portion 23b, and a protrusion portion 23c. The cylindrical portion 23a extends in the axial direction. The bottom portion 23b is provided to close an opening of a lower end of the cylindrical portion 23a. The protrusion portion 23c protrudes from an upper end portion of the cylindrical portion 23a toward an outer side in the radial direction. The motor main body M is accommodated in the cylindrical portion 23a of the motor case 23. The motor case 23 is formed of a metal. Considering heat radiation and molding easiness, as a specific material of the motor case 23, for example, an aluminum alloy is appropriate. The motor case 23 is fabricated by, for example, cutting a molded body obtained from an aluminum alloy by die-casting or the like. A through-hole passing through the rotary shaft 21 is formed at a center of the bottom portion 23b of the motor case 23. A first bearing 25 configured to rotatably support the rotary shaft 21 is attached to the through-hole of the bottom portion 23b.

The motor main body M includes a rotor 26 and a stator 27. The rotor 26 includes a cylindrical rotor core 26a provided around the rotary shaft 21 and fixed to the rotary shaft 21, and a plurality of permanent magnets 26b provided on an outer circumferential surface of the rotor core 26a. The plurality of permanent magnets 26b are disposed such that polarities (an S pole and an N pole) on the outer circumferential surface of the rotor 26 are alternately replaced in the circumferential direction. The stator 27 is disposed outside the rotor 26 in the radial direction with a gap. The stator 27 has a stator core 27a made by stacking steel plates, and a winding 27b wound on the stator core 27a via an insulator 27c. The stator 27 is fixed into the cylindrical portion 23a of the motor case 23 by press-fitting, shrink-fitting, or the like. The rotary shaft 21, the rotor 26, and the stator 27 are disposed coaxially with each other.

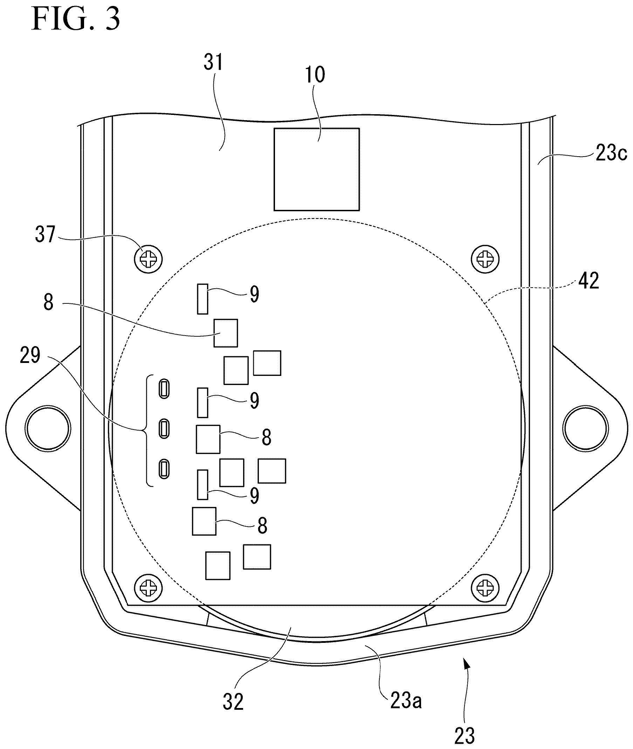

An annular connecting ring 28 is disposed above the stator 27 and near the winding 27b. The connecting ring 28 has a structure in which a bus bar 29 for electric wiring (see FIG. 3) is insert-molded in an insulating resin. A 3-phase winding is configured by connecting an end portion of each of the windings 27b to the bus bar 29 of the connecting ring 28. The bus bar 29 of each phase protruding from the connecting ring 28 extends toward the control device 3. The three bus bars 29 are provided on the connecting ring 28 to correspond to each of the phases (U, V, W). Each of the bus bars 29 protrudes upward from the connecting ring 28 and is disposed to pass through the circuit board 31 of the control device 3.

A disk-shaped heatsink 32 is fitted into an upper end portion in the cylindrical portion 23a of the motor case 23. The heatsink 32 is disposed in a posture in which the center axis is parallel to the axial direction. A height of the upper surface of the heatsink 32 is equal to a height of the upper surface of the protrusion portion 23c of the motor case 23. In the embodiment, the upper surface of the heatsink 32 is formed in a planar shape, and flush with the upper surface of the protrusion portion 23c. The heatsink 32 is formed of a metal (for example, an aluminum alloy). The motor case 23 has, for example, a greater plate thickness in the axial direction than the bottom portion 23b of the motor case 23 in order to ensure a relatively large heat capacity.

A through-hole 32a passing in a plate thickness direction is formed in a central portion of the heatsink 32. A second bearing 33 (bearing) configured to rotatably support the rotary shaft 21 is attached to the through-hole 32a. The second bearing 33 supports an end portion 21b opposite to the output end 21a of the rotary shaft 21 (an upper end in the embodiment). The end portion 21b of the rotary shaft 21 is disposed in the through-hole 32a of the heatsink 32. The rotation angle sensor 7 is provided on a lower surface of the circuit board 31 and disposed at a position facing the through-hole 32a of the heatsink 32. While the rotation angle sensor 7 protrudes downward from the lower surface of the circuit board 31, since the rotation angle sensor 7 is disposed in the through-hole 32a of the heatsink 32, it does not interfere with the heatsink 32. Further, three through-holes (not shown) passing through the bus bars 29 of the phases (U, V, W) are formed in the heatsink 32.

Both end portions of the rotary shaft 21 are rotatably supported by the first bearing 25 and the second bearing 33. For this reason, the rotor 26 fixed to the rotary shaft 21 is also rotatable inside the stator 27 in the radial direction. A sensor magnet 34 is attached to the end portion 21b of the rotary shaft 21 opposite to the output end 21a. At least a part of the sensor magnet 34 is formed of a permanent magnet and emits a magnetic field. The sensor magnet 34 is rotated together with the rotary shaft 21. As the rotary shaft 21 rotates, the sensor magnet 34 also rotates, and therefore the magnetic field changes. The sensor magnet 34 is disposed to face the rotation angle sensor 7 in the axial direction. For this reason, the rotation angle sensor 7 detects a rotation angle of the rotary shaft 21 of the motor 2 according to the change of the magnetic field emitted from the sensor magnet 34 rotated with the rotary shaft 21.

The control device 3 includes the circuit board 31 and an electronic circuit 35 provided on the circuit board 31. The circuit board 31 is, for example, a multilayer printed circuit board on which a plurality of insulating layers and a plurality of conductor layers are laminated. The electronic circuit 35 includes the inverter circuit 4, the control circuit 5, and the voltage-dividing circuit 6, which are shown in FIG. 1. Electronic parts such as the rotation angle sensor 7, the power semiconductor elements 8, the current-detecting element 9, the CPU 10, and the like are mounted on the circuit board 31. The electronic circuit 35 is constituted by these electronic parts and a circuit pattern formed on the circuit board 31. The circuit board 31 is covered with a cover 36 from above.

The cover 36 is configured to cover the circuit board 31. The circuit board 31 is accommodated in a space surrounded by the cover 36 and the motor case 23. The cover 36 has a function of protecting the circuit board 31 from external electromagnetic noise, a function of preventing leakage of electromagnetic noise generated from the circuit board 31 to the outside of the cover 36, or the like. In order to exhibit these functions, it is desirable to fabricate the cover 36 using a metal. In the embodiment, the cover 36 is made of a resin and a metal.

A connector 30 is provided on a lower surface of the protrusion portion 23c of the motor case 23. The connector 30 is used to connect the electric power steering device 1 to the vehicle-side power supply 50 and the vehicle-side sensor 51. A plurality of connector terminals 43 are provided above the connector 30. The connector terminals 43 are electrically connected to a terminal (not shown) in the connector 30. An opening (not shown) through which the connector terminals 43 pass is provided in the protrusion portion 23c of the motor case 23, and the connector terminals 43 are inserted into the opening. In addition, the connector terminals 43 are inserted into the through-holes formed in the circuit board 31, and the circuit pattern of the circuit board 31 and the connector terminals 43 are electrically connected by soldering. Further, a connecting method of the circuit board 31 and the connector terminals 43 is not limited to soldering, and for example, press-fitting may be employed. The electric power of the vehicle-side power supply 50 and the signal of the vehicle-side sensor 51 are transmitted to the circuit board 31 via the connector 30. Further, while the connector 30 according to the embodiment is provided on the lower surface of the protrusion portion 23c, there is no limitation thereto, and it is also possible to form a hole in the cover 36 and attach the connector 30 to the upper surface of the circuit board 31 from above through the hole.

Electronic parts other than the rotation angle sensor 7 are not mounted on the lower surface of the circuit board 31. The lower surface of the circuit board 31 is disposed in contact with a surface of the heatsink 32 opposite to the motor 2 (the upper surface according to the embodiment). More specifically, the lower surface of the circuit board 31 is in contact with the upper surface of the heatsink 32 via applied insulating grease (not shown in FIG. 2). It is preferable to select grease with high thermal conductivity.

FIG. 3 is a plan view of the circuit board 31. FIG. 3 shows an upper surface of the circuit board 31.

As shown in FIG. 3, the circuit board 31 is fixed to the motor case 23 by a plurality of screws 37. The three bus bars 29 corresponding to the phases are connected to the circuit board 31 while passing in the plate thickness direction. The bus bars 29 are connected to the circuit pattern (not shown) in the circuit board 31 by soldering, and the circuit pattern is electrically connected to the winding 27b of the motor 2 via the bus bars 29. Further, the circuit pattern of the circuit board 31 and the bus bars 29 of the phases are not limited to the soldering, and for example, may be connected by press-fitting.

When seen in the axial direction, a virtual region obtained by photographing an outer shape of the heatsink 32 on the circuit board 31 is referred to as a projection region 42. The circuit board 31 protrudes toward an outer side of the projection region 42 when seen in the axial direction. The protrusion portion 23c of the motor case 23 also protrudes outward from the cylindrical portion 23a in the radial direction to support a portion of the circuit board 31 protruding from the projection region 42.

Here, the power semiconductor elements 8, the current-detecting element 9, and the like, which are mounted on the circuit board 31, are heat generating elements that generate heat when a large current is applied as the motor 2 is driven. In order to not shorten the continuous usage time of the electric power steering device 1 and prevent a decrease in steering assisting force, it is preferable that the heat generated by these heat generating elements is quickly released to the outside of the electric power steering device 1.

In the embodiment, the power semiconductor elements 8 and the current-detecting element 9 are disposed on the upper surface of the circuit board 31. In addition, the power semiconductor elements 8 and the current-detecting element 9 are disposed in the projection region 42 of the circuit board 31. That is, the power semiconductor elements 8 and the current-detecting element 9 are disposed parallel to the heatsink 32 in the axial direction. Further, since the lower surface of the circuit board 31 is in contact with the upper surface of the heatsink 32 via the grease, the heat generated by these heat generating elements is transferred to the heatsink 32 via the circuit board 31 and grease, and further, radiated to the outside from the heatsink 32.

While the input electric power of the electric power steering device 1 to the inverter circuit 4 is input electric power P = current I × voltage V (W), since the heating value of the electronic parts or the motor 2 is heating value Q = resistance R × current I² × time t, the value of current has a large effect on heat generation. In the related art, in general, while the voltage of 12 V is supplied from the vehicle-side power supply to the electric power steering device, since the voltage of 24 V is supplied from the vehicle-side power supply 50 to the inverter circuit 4 of the control device 3 in the embodiment, when the input electric power to the motor 2 is to be the same as the related art, the voltage will be twice as much as the related art, so the current can be halved. Accordingly, it is possible to suppress heat generation of the power semiconductor elements 8 such as an FET or the like in the inverter circuit 4.

Further, such an effect of suppressing the heating value has the same effect on all heat generating element capable of lowering current such as the current-detecting element 9, the ripple capacitor, the power relay, the choke coil, or the like, as well as the power semiconductor elements 8 such as the FET or the like mounted on the circuit board 31. In addition, heat generation of the bus bar 29 and of the winding 27b of the motor 2 can also be suppressed similarly.

Since the heating value of the power semiconductor elements 8 and the current-detecting element 9 can be suppressed, the heat radiating structure simplified using the heatsink 32 of the embodiment can be adopted. As described above, the power semiconductor elements 8 and the current-detecting element 9 are disposed in the upper surface of the circuit board 31 and the projection region 42. For this reason, even in the simplified heat radiating structure in which the lower surface of the circuit board 31 is in contact with the upper surface of the heatsink 32 via the grease, the heat generated by the heat generating element described above can be appropriately released from the heatsink 32 to the outside via the circuit board 31 and the grease. Since the heating value of the heat generating element can be suppressed, the heat radiating structure can be miniaturized and simplified, and it is possible to reduce the weight of the electric power steering device 1 and manufacture it at a lower cost.

Further, while the voltage of 24 V is supplied from the vehicle-side power supply 50 to the control device 3 in the embodiment, there is no limitation thereto, and for example, a voltage of 48 V may be supplied from the vehicle-side power supply 50 to the control device 3 and the inverter circuit 4. When the input electric power to the motor 2 is the same as in the related art, since the voltage will be 4 times as much as in the related art, the current can be reduced to 1/4, and the heating value of the heat generating element can be further suppressed. Further, as described above, from the discharging and charging status of the vehicle-side power supply 50, the voltage supplied from the vehicle-side power supply 50 is not necessarily constant, and the inverter circuit 4 in this case is configured to operate appropriately if the voltage is, for example, 42 V or more and 56 V or less. From the above, in order to suppress the heating value, the inverter circuit 4 only needs to be configured to be driven at a voltage of 20 V or more and 56 V or less.

In addition, while the control circuit 5 in this embodiment operates at a voltage of 12 V, it is also possible to increase the pressure resistance of the electronic parts that constitute the control circuit 5, and operate the control circuit 5 at a voltage of 24 V like the inverter circuit 4. In this case, it is no longer to supply the voltage of 12 V from the voltage-dividing circuit 6 to the control circuit 5.

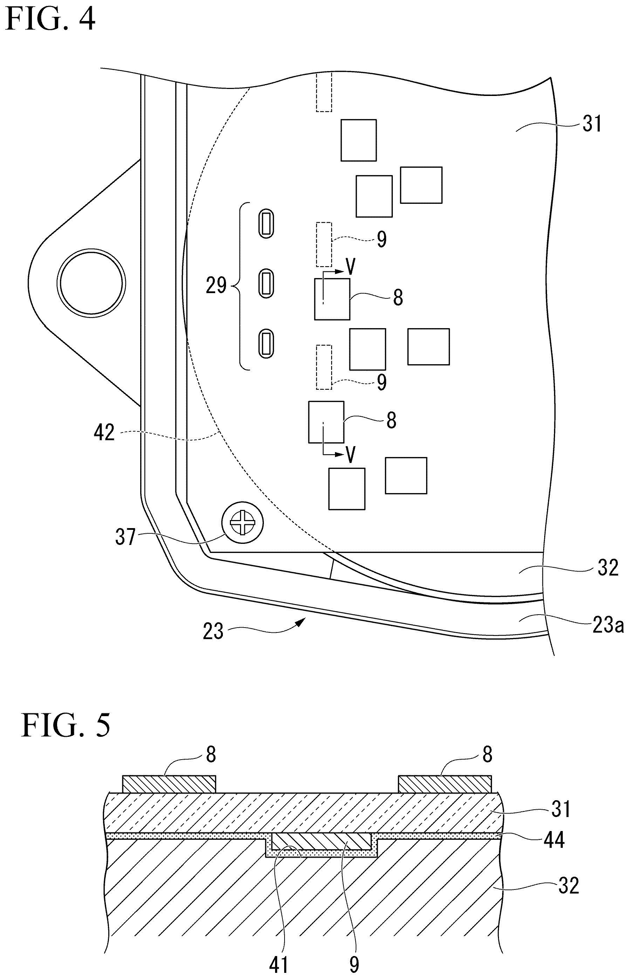

The embodiment employs the following variants. FIG. 4 is a plan view of the circuit board 31 according to Variant 1 of Embodiment 1. FIG. 5 is a cross-sectional view along line V-V of FIG. 4. In the configuration of Embodiment 1, while the current-detecting element 9 is disposed in the upper surface of the circuit board 31 and the projection region 42, the current-detecting element 9 of the variant is disposed in the projection region 42 and provided on a lower surface of the circuit board 31, i.e., a surface of the circuit board 31 facing the heatsink 32. When the current-detecting element 9 is provided on the lower surface of the circuit board 31 in this way, while it is difficult to bring the lower surface of the circuit board 31 other than the current-detecting element 9 close to the heatsink 32, the heatsink 32 of this variant is formed with a concave portion 41 in which the current-detecting element 9 is accommodated at a position facing the current-detecting element 9. For this reason, like Embodiment 1 described above, it becomes possible to bring the lower surface of the circuit board 31 other than the current-detecting element 9 closer to the upper surface of the heat sink 32. By adopting this configuration, even if there are restrictions on the mounting region of the circuit board 31, a part of the heat generating element can be mounted on the lower surface of the circuit board 31, and good heat radiation performance can be maintained. Further, a gap between the lower surface of the circuit board 31 and the upper surface of the heatsink 32 and the inside of the concave portion 41 are filled with grease 44 to form a heat radiation path.

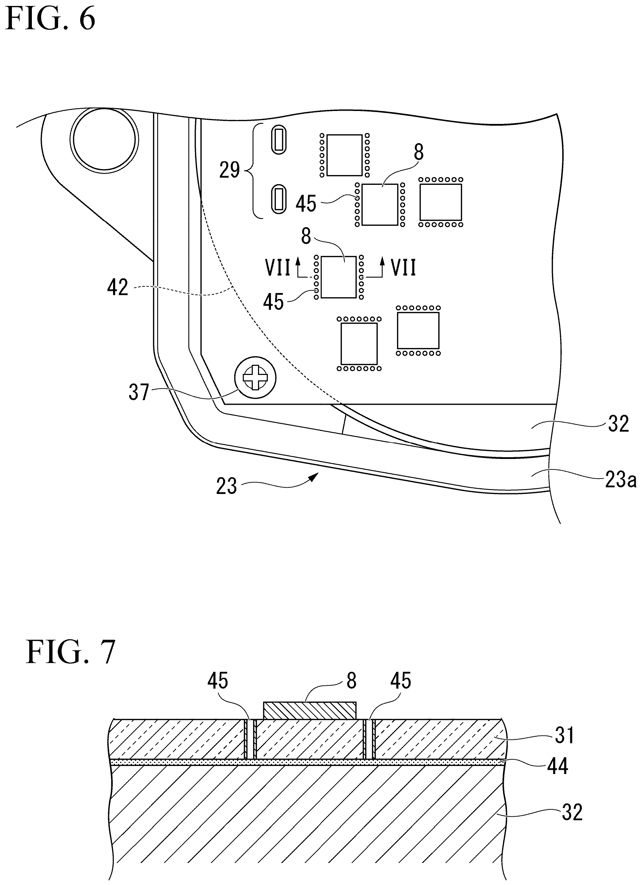

FIG. 6 is a plan view of the circuit board 31 according to Variant 2 of Embodiment 1. FIG. 7 is a cross-sectional view along line VII-VII of FIG. 6. In the variant, a plurality of thermal-vias 45 for heat radiation are disposed around the power semiconductor elements 8 in the circuit board 31. The thermal-vias 45 are disposed around the power semiconductor elements 8 and positions different from the power semiconductor elements 8 in the circuit board 31 when seen in a plan view. The thermal-via 45 has a configuration in which metal plating of copper, gold, or the like, with good thermal conductivity is performed on an inner surface of a through-hole passing through the circuit board 31 in the plate thickness direction. By disposing the above-mentioned thermal-vias 45 around the power semiconductor elements 8, heat of the power semiconductor elements 8 can be more efficiently transmitted from the upper surface of the circuit board 31 toward the heatsink 32 via the metal plating of the thermal-via 45, and heat radiation performance can be improved.

Further, while not shown, the circuit pattern extending in a surface direction along the upper surface of the circuit board 31 may be formed on the upper surface to connect the thermal-vias 45 and the power semiconductor elements 8, and the circuit pattern extending from the thermal-via 45 in the surface direction may be formed on the lower surface of the circuit board 31. By forming such a circuit pattern, the heat of the power semiconductor elements 8 can be more efficiently released via the thermal-vias 45. In addition, the thermal-vias 45 may be formed around the heat generating element other than the power semiconductor elements 8.

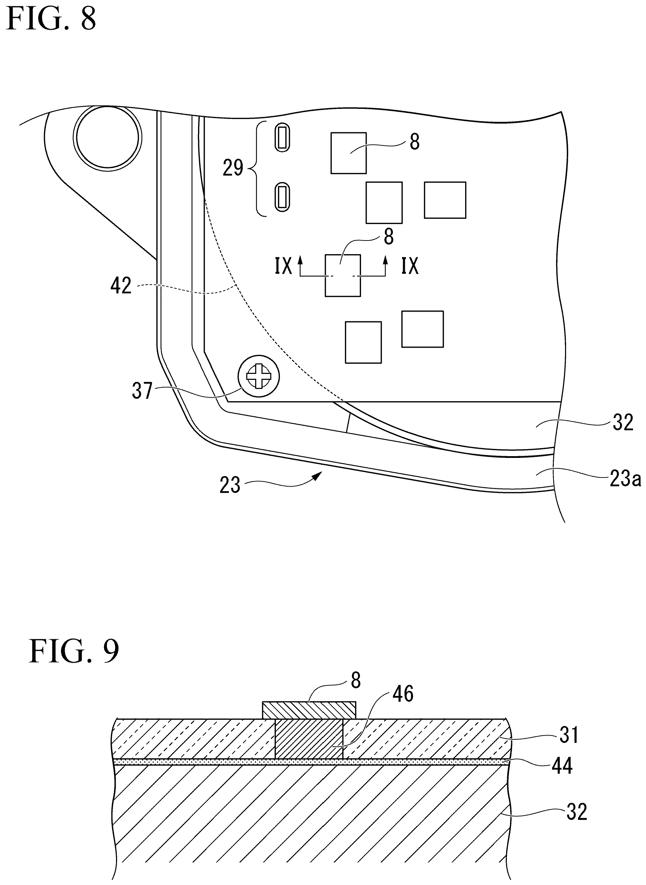

FIG. 8 is a plan view of the circuit board 31 according to Variant 3 of Embodiment 1. FIG. 9 is a cross-sectional view along line IX-IX of FIG. 8. In the variant, a copper inlay 46 is disposed at a position in the circuit board 31 between the power semiconductor elements 8 and the heatsink 32 in the axial direction. The copper inlay 46 has a configuration in which an inlay formed of copper with good thermal conductivity is disposed in a through-hole passing through the circuit board 31 in the plate thickness direction. The upper surface of the copper inlay 46 is preferably in contact with the lower surfaces of the power semiconductor elements 8. By disposing the copper inlay 46 described above, heat of the power semiconductor elements 8 can be more efficiently transmitted toward the heatsink 32 via the copper inlay 46, and heat radiation performance can be improved. In addition, the copper inlay 46 may be disposed between the heat generating element and the heatsink 32 other than the power semiconductor elements 8.

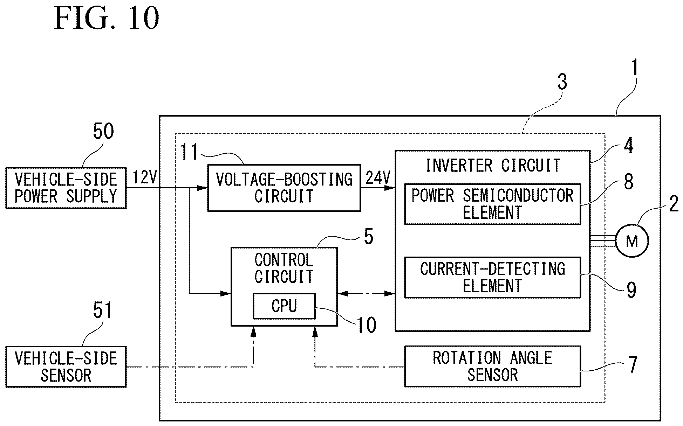

FIG. 10 is a block diagram showing the electric power steering device 1 according to Variant 4 of Embodiment 1. The variant is distinguished from the configuration of Embodiment 1 described above in that the vehicle-side power supply 50 supplies electric power of 12 V to the control device 3 of the electric power steering device 1, and the control device 3 includes a voltage-boosting circuit 11, instead of the voltage-dividing circuit 6 in Embodiment 1 described above.

The voltage of 12 V (second voltage) supplied from the vehicle-side power supply 50 is supplied to the control circuit 5 and the voltage-boosting circuit 11. The control circuit 5 is driven by the voltage of 12 V supplied from the outside. The voltage-boosting circuit 11 generates a voltage of 24 V (first voltage) higher than the voltage of 12 V supplied from the outside. As the voltage-boosting circuit 11, for example, a DC/DC converter can be employed. The voltage of 24 V generated by the voltage-boosting circuit 11 is supplied to the inverter circuit 4, and the inverter circuit 4 is driven by the voltage of 24 V generated by the voltage-boosting circuit 11. Further, as described above, since the heating value is proportional to the square of the current value, the output voltage of the voltage-boosting circuit 11 is further increased to, for example, 48 V, and on the other hand, the current in the inverter circuit 4 may be further decreased to further reduce the heating value. The voltage-boosting circuit 11 may output a voltage of, for example, 20 V or more. Correspondingly, the inverter circuit 4 may also be configured to be driven by a voltage of 20 V or more. According to the variant, measures can be taken to reduce the heating value in the electric power steering device 1 without changing the configuration of the vehicle-side power supply 50 from the related art.

Further, in Embodiment 1 and Variants 1 to 4, the first voltage that is a voltage at which the inverter circuit 4 is driven may be 20 V or more. Meanwhile, the second voltage that is a voltage at which the control circuit 5 is driven may be a voltage or more that is lower than the first voltage and at which the control circuit 5 can be operated appropriately.

As described above, the electric power steering device 1 according to the embodiment includes the motor 2, the heatsink 32 in which the second bearing 33 configured to rotatably support the rotary shaft 21 of the motor 2 is provided, and the circuit board 31, on which the inverter circuit 4 configured to drive the motor 2 is provided, disposed on a surface of the heatsink 32 opposite to the motor 2. The power semiconductor elements 8 and the current-detecting element 9 that constitute the inverter circuit 4 is disposed in the projection region 42 of the circuit board 31 that projects the outer shape of the heatsink 32 when seen in the axial direction of the rotary shaft 21. The inverter circuit 4 is configured to be driven by the first voltage of 20 V or more.

According to this configuration, since the current in the inverter circuit 4 can be reduced, the heating value of the power semiconductor elements 8 and the current-detecting element 9 can be suppressed, so a simplified heat radiating structure using the heat sink 32 can be adopted. As described above, the power semiconductor elements 8 and the current-detecting element 9 are disposed in the projection region 42 of the circuit board 31. For this reason, even in the simplified heat radiating structure in which the lower surface of the circuit board 31 is in contact with the upper surface of the heatsink 32 via the grease, the heat generated by the above-mentioned heat generating element can be released to the outside appropriately from the heatsink 32 via the circuit board 31 and the grease. Since the heating value of the heat generating element can be suppressed, the heat radiating structure can be miniaturized and simplified, the weight of the electric power steering device 1 is reduced, and it is possible to manufacture it at a lower cost.

In addition, the circuit board 31 may be provided with the voltage-dividing circuit 6 (step-down circuit) configured to generate a second voltage lower than the first voltage from the first voltage supplied from the outside, and the control circuit 5 driven with the second voltage generated by the voltage-dividing circuit 6 and configured to control the inverter circuit 4. According to this configuration, since the control circuit 5 is driven at the second voltage lower than the first voltage, for example, a configuration that operates at a voltage of 12 V that is common in the related art can be employed and an increase in cost of the electronic parts due to change of the pressure resistance can be avoided without improving the pressure resistance of the electronic parts that constitute the control circuit 5.

In addition, the voltage-boosting circuit 11 configured to generate the first voltage from the second voltage lower than the first voltage supplied from the outside is provided on the circuit board 31, and the inverter circuit 4 may be driven at the first voltage generated by the voltage-boosting circuit 11. According to this configuration, without changing the configuration and output voltage of the vehicle-side power supply 50 of the outside from the related art, the effect of reducing the heating value in the inverter circuit 4 and the like can be obtained only by the configuration of the electric power steering device 1.

Further, in this case, the control circuit 5 configured to control the inverter circuit 4 is provided on the circuit board 31, and the control circuit 5 may be driven at the second voltage supplied from the outside. According to this configuration, since the control circuit 5 is driven at the second voltage lower than the first voltage, without improving the pressure resistance of the electronic parts that constitute the control circuit 5, for example, a configuration that operates at the voltage of 12 V, which is general in the related art, can be employed, and an increase in cost of the electronic parts due to changes in pressure resistance can be avoided.

In addition, the heat generating element that constitutes the inverter circuit 4 may include the current-detecting element 9 provided on a surface of the circuit board 31 facing the heatsink 32, and the concave portion 41 in which the current-detecting element 9 is accommodated may be formed at a position of the heatsink 32 facing the current-detecting element 9. According to this configuration, it is difficult to mount the current-detecting element 9 on the upper surface of the circuit board 31 due to constraints of the mounting region, and even when it is mounted on the lower surface of the circuit board 31, it becomes possible to bring the surface of the circuit board 31 other than the current-detecting element 9 into close contact with the heatsink 32 by accommodating the current-detecting element 9 in the concave portion 41, so that heat transfer efficiency between the circuit board 31 and the heatsink 32 can be maintained high.

In addition, in the circuit board 31, the thermal-via 45 for heat radiation may be disposed around the heat generating elements such as the power semiconductor elements 8, the current-detecting element 9, and the like. According to this configuration, the heat generated by the heat generating element can be efficiently transmitted from a heat generating element mounting surface of the circuit board 31 to an opposite surface via the thermal-via 45, and thus, heat radiation efficiency can be improved.

In addition, in the circuit board 31, the copper inlay 46 may be disposed at a position between the heatsink 32 and the heat generating element such as the power semiconductor elements 8, the current-detecting element 9, and the like, in the axial direction. According to this configuration, the heat generated by the heat generating element can be efficiently transmitted from the heat generating element mounting surface of the circuit board 31 to the opposite surface via the copper inlay 46, and thus, heat radiation efficiency can be improved.

### Embodiment 2

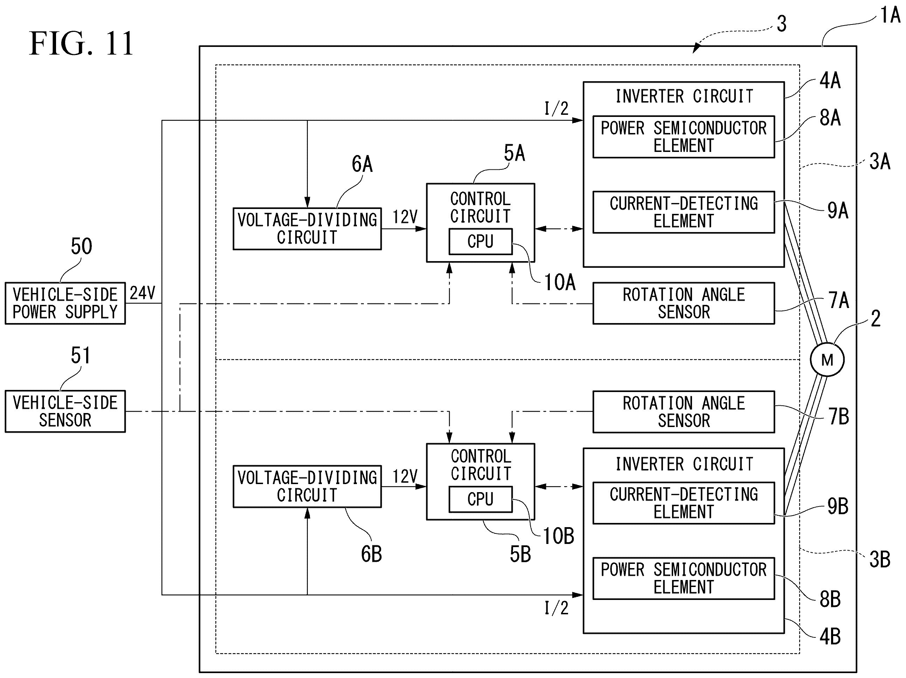

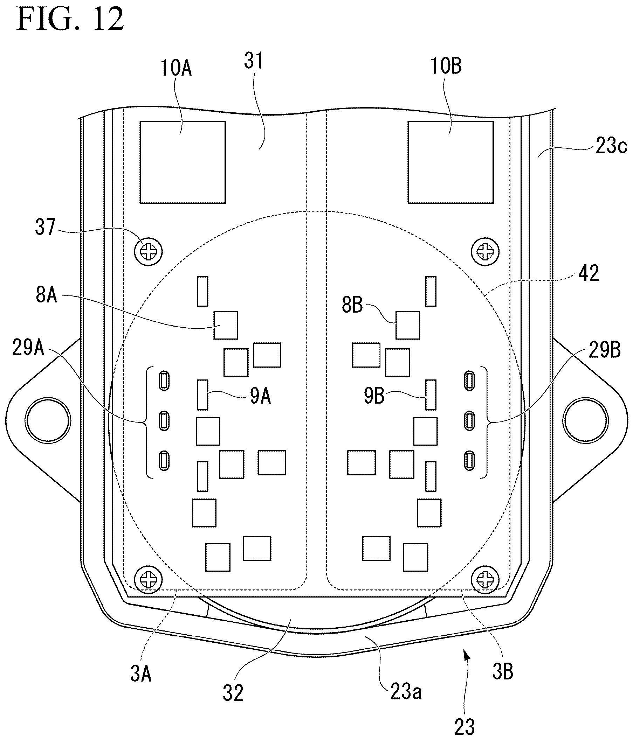

FIG. 11 is a block diagram showing an electric power steering device 1A according to Embodiment 2. FIG. 12 is a plan view of the circuit board 31 according to Embodiment 2. A structure of the motor 2 according to the embodiment is the same as the structure of the motor 2 according to Embodiment 1. For this reason, components of the motor 2 that are similar to those of Embodiment 1 are designated by the same reference signs and description thereof will be omitted, and the description will focus on the differences.

As shown in FIG. 11, the control device 3 according to the embodiment includes two control units 3A and 3B. The stator 27 of the motor 2 according to the embodiment has two sets of 3-phase windings (not shown). A first control unit 3A is configured to control a first 3-phase winding, and a second control unit 3B is configured to control a second 3-phase winding.

The control units 3A and 3B as the same circuit configuration as each other. In addition, each of the control units 3A and 3B has substantially the same circuit configuration as the control device 3 described in Embodiment 1. Here, in the embodiment, among the components of the first control unit 3A, a subscript "A" is attached to the same reference sign as the corresponding component in Embodiment 1. In addition, among the components of the second control unit 3B, a subscript "B" is attached to the same reference sign as the corresponding component in Embodiment 1.

Hereinafter, description of the same structure as the Embodiment 1 will be omitted and will focus on the differences. For example, the control unit 3A includes the control circuit 5A and the inverter circuit 4A. The configuration of the control circuit 5A and the inverter circuit 4A is the same as the configuration of the control circuit 5 and the inverter circuit 4 described in Embodiment 1. In addition, as shown in FIG. 12, the mounting region of the circuit board 31 according to the embodiment is divided into two regions corresponding to the control units 3A and 3B, and the electronic parts included in the control units 3A and 3B are also disposed in these two regions, respectively. The plurality of power semiconductor elements 8A, the plurality of current-detecting elements 9A, the CPU 10A, and the three bus bars 29A are disposed in the region shown by the reference sign 3A, and the plurality of power semiconductor elements 8B, the plurality of current-detecting elements 9B, the CPU 10B, and the three bus bars 29B are disposed in the region shown by the reference sign 3B. In FIG. 12, the electronic parts such as a ripple capacitor, a choke coil, a power relay, and the like, are not shown.

Returning to FIG. 11, the motor 2 is a brushless motor including two sets of 3-phase windings. The electric power steering device 1A includes rotation angle sensors 7A and 7B configured to detect a rotation angle of the motor 2. A rotation angle signal output from a first rotation angle sensor 7A is input to the control circuit 5A of the first control unit 3A, and a rotation angle signal output from a second rotation angle sensor 7B is input to the control circuit 5B of the second control unit 3B.

The control units 3A and 3B can drive the motors 2 independently. That is, the inverter circuits 4A and 4B drive the motors 2, respectively. However, the control units 3A and 3B are each supplied with current obtained by dividing the current output from the vehicle-side power supply 50 into two, and the same signal output from the vehicle-side sensor 51 is input to both. For example, in the first control unit 3A, the first control circuit 5A and the first inverter circuit 4A are operated on the basis of the input information from the vehicle-side sensor 51, the first rotation angle sensor 7A, and the like. Accordingly, the rotary shaft 21 is driven via the first winding. Similarly, in the second control unit 3B, the second control circuit 5B and the second inverter circuit 4B are operated on the basis of the input information from the vehicle-side sensor 51, the second rotation angle sensor 7B, and the like. Accordingly, the rotary shaft 21 is driven via the second winding.

Redundancy is ensured by configuring the two control units 3A and 3B to drive the motors 2 independently of each other in this way. For example, even when one of the control units 3A and 3B fails and the motor 2 cannot be driven, since the driving of the motor 2 can be maintained by the other of the control units 3A and 3B, the steering assisting force can be prevented from becoming completely zero, and furthermore, since the driver who is operating the steering wheel can sense the decrease in the steering assisting force, the driver can quickly recognize the occurrence of a problem.

As described above, while the control units 3A and 3B are each supplied with the current obtained by dividing the current output from the vehicle-side power supply 50 into two, since the control units 3A and 3B can drive the motors 2 independently, it becomes input electric power P to the motor 2 = (voltage V × current I/2) + (voltage V × current I/2), the electric power input to the motor 2 is the same as that of Embodiment 1, and the steering assisting force output from the motor 2 is also the same as that of Embodiment 1. Meanwhile, since the current supplied to each of the inverter circuits 4A and 4B is 1/2 of the current in Embodiment 1, the heat generated by the heat generating element of each of the inverter circuits 4A and 4B can be reduced compared to Embodiment 1.

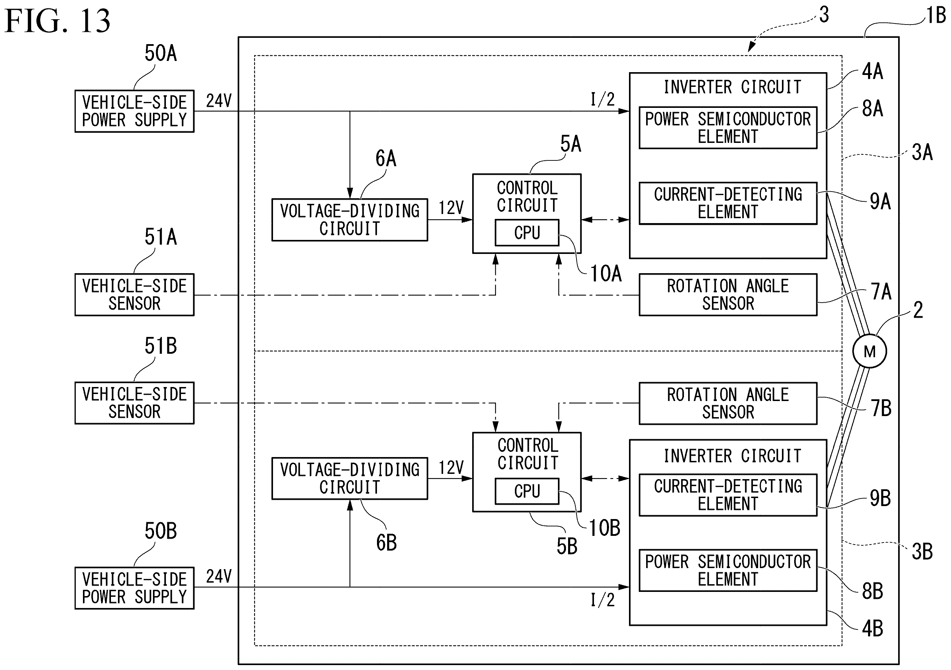

The embodiment can employ the following variants. FIG. 13 is a block diagram showing an electric power steering device 1B according to a variant of Embodiment 2. In the configuration of Embodiment 2 described above, while the current obtained by dividing the current output from the vehicle-side power supply 50 into two is supplied to each of the control units 3A and 3B and the same signal output from the vehicle-side sensor 51 is input to both, in the variant, the vehicle-side power supplies 50A and 50B and the vehicle-side sensors 51A and 51B corresponding to the control units 3A and 3B are used, respectively. The first vehicle-side power supply 50A supplies electric power to the first control unit 3A, and the second vehicle-side power supply 50B supplies electric power to the second control unit 3B. In addition, in the first control unit 3A, the first control circuit 5A and the first inverter circuit 4A are operated on the basis of the input information from the first vehicle-side sensor 51A, the first rotation angle sensor 7A, and the like. Similarly, in the second control unit 3B, the second control circuit 5B and the second inverter circuit 4B are operated on the basis of the input information from the second vehicle-side sensor 51B, the second rotation angle sensor 7B, and the like. Further, while not shown, two connectors configured to connect the circuit board 31 of the variant to the vehicle-side power supplies 50A and 50B and the vehicle-side sensors 51A and 51B are also provided.

In the variant, while the vehicle-side power supplies 50A and 50B supplies electric power to the control units 3A and 3B, respectively, the current supplied from each of the vehicle-side power supplies 50A and 50B is 1/2 of the current supplied from the vehicle-side power supply 50 shown in FIG. 11. For this reason, even in the variant, since the current supplied to each of the inverter circuits 4A and 4B is 1/2 of the current in Embodiment 1, the heat generated by the heat generating element of each of the inverter circuits 4A and 4B can be reduced compared to Embodiment 1.

Further, in Embodiment 2, while each of the two inverter circuits 4A and 4B drives the motor 2 and a two-system configuration is adopted, the number of the inverter circuits is not limited to 2, and the number of the provided inverter circuits may be 3 or more, each driving the motor 2. For example, a 4-system configuration may be adopted. When maintaining the output of the motor 2 like in the related art, by increasing the number of inverter circuits, the current supplied to the inverter circuits can be further reduced, and therefore, the heating value of the heat generating element can be further reduced.

The present disclosure is not limited to the configuration of the embodiments and variants described above, but limited only by the scope of the claims. It is possible to combine the variants described in each embodiment with each other, or to modify or omit the configuration related to each embodiment as appropriate.

For example, while Embodiment 2 is described on the basis of the control device 3 shown in FIG. 1 of Embodiment 1, the control device 3 described in Variants 1 to 4 of Embodiment 1 may also be applied to Embodiment 2.

### Reference Signs List

1, 1A, 1B Electric power steering device
2 Motor
4, 4A, 4B Inverter circuit
5, 5A, 5B Control circuit
6 Voltage-dividing circuit (step-down circuit)
8, 8A, 8B Power semiconductor element (heat generating element)
9, 9A, 9B Current-detecting element (heat generating element)
11 Voltage-boosting circuit
21 Rotary shaft
31 Circuit board
32 Heatsink
33 Second bearing (bearing)
41 Concave portion
42 Projection region
45 Thermal via
46 Copper inlay

## Claims

1. An electric power steering device comprising:
a motor;
a heatsink in which a bearing configured to rotatably support a rotary shaft of the motor is provided; and
a circuit board, on which an inverter circuit configured to drive the motor is provided, disposed on a surface of the heatsink opposite to the motor,
wherein a heat generating element that constitutes the inverter circuit is disposed in a projection region of the circuit board on which an outer shape of the heatsink is projected when seen in an axial direction of the rotary shaft, and
the inverter circuit is configured to be driven by a first voltage of 20 V or more.

2. The electric power steering device according to claim 1, wherein the circuit board is provided with:
a step-down circuit configured to generate a second voltage lower than the first voltage from the first voltage supplied from the outside; and
a control circuit driven at the second voltage generated in the step-down circuit and configured to control the inverter circuit.

3. The electric power steering device according to claim 1, wherein the circuit board is provided with a voltage-boosting circuit configured to generate the first voltage from a second voltage supplied from the outside and lower than the first voltage, and
the inverter circuit is driven at the first voltage generated by the voltage-boosting circuit.

4. The electric power steering device according to claim 3, wherein the circuit board is provided with a control circuit configured to control the inverter circuit, and
the control circuit is driven at the second voltage supplied from the outside.

5. The electric power steering device according to any one of claims 1 to 4, wherein a plurality of the inverter circuits are provided on the circuit board, and
each of the plurality of inverter circuits drives the motor.

6. The electric power steering device according to any one of claims 1 to 5, wherein the heat generating element comprises a current-detecting element provided on a surface of the circuit board facing the heatsink, and
a concave portion in which the current-detecting element is accommodated is formed at a position of the heatsink facing the current-detecting element.

7. The electric power steering device according to any one of claims 1 to 6, wherein a thermal-via for radiation is disposed around the heat generating element in the circuit board.

8. The electric power steering device according to any one of claims 1 to 7, wherein a copper inlay is disposed in the circuit board at a position between the heat generating element and the heatsink in the axial direction.
